# EUROPEAN PATENT SPECIFICATION

(11) **EP 3 488 742 B1**
(45) Date of publication and mention of the grant of the patent: **10.06.2020**
(21) Application number: 16795397.5
(22) Date of filing: 20.07.2016
(51) Int. Cl.: A47J 19/02, A23N 1/00

(54) **AUTOMATIC JUICING MACHINE AND METHOD FOR PREPARING A JUICE DRINK**
AUTOMATISCHE SAFTMASCHINE UND VERFAHREN ZUR ZUBEREITUNG EINES SAFTGETRÄNKS
PRESSE-FRUITS AUTOMATIQUE ET PROCÉDÉ POUR PRÉPARER UNE BOISSON PRESSÉE

(43) Date of publication of application: 29.05.2019
(73) Proprietor: Reenginy Tecnologia SL, 08013 Barcelona (ES)
(72) Inventor: RUIZ TARRES, Ramón Maria, 08013 Barcelona (ES)
(74) Representative: Ponti & Partners, S.L.P
(86) International application number: PCT/ES2016/070551
(87) International publication number: WO 2018/015577

(56) References cited:
- WO-A1-2015/020912
- CN-A- 104 783 638
- GB-A- 1 016 644
- GB-A- 2 158 697
- GB-A- 2 453 352

## Description

### OBJECT OF THE INVENTION

The object of the present invention is the filing of an automatic fruit juice squeezing machine for squeezing juice from pieces of fruit in order to dispense a drink made from said fruit.

More specifically, the invention proposes the development of an automatic fruit juice squeezing machine envisaged to dispense a drink made from a piece or portion of fruit, for example, directly in a receptacle for drinking, which has improved hygienic conditions and avoids the manipulation of the pulp.

### BACKGROUND OF THE INVENTION

There is currently a wide variety of fruit squeezing devices and machines, particularly citrus fruits, for obtaining fruit juice.

In terms of user or domestic devices, there are mainly two types of devices, one of which of the type that are manually actuated, such as for example that disclosed in document number ES 107652U. A second type is that which consists of motorised machines or devices (electrically powered) wherein the user holds a cut piece of fruit on a rotating cone disposed around a strainer receptacle, such as for example that disclosed in Spanish patent number ES 2 272 166.

However, in practice it is observed that, as the piece of fruit is being squeezed, a residual pulp is created on the strainer that can obstruct the passage of the liquid (or juice) towards the outlet point, such that the user must remove the pulp continuously, due to which it is tedious, increases drink obtainment time and requires more time for performing the cleaning operation of the fruit juice squeezing equipment.

In addition, the applicant is currently unaware of the existence of an invention having all the characteristics described herein.

Document CN104783638A relates to an automatic fruit squeezing machine having a motorized squeezing element and a bag associated to a funnel for guiding squeezed juice to a liquid outlet of the machine. The machine of this document has the drawback that the pulp of the piece of fruit being squeezed inside the bag usually blocks the outflow of juice.

### DESCRIPTION OF THE INVENTION

The present invention has been developed for the purpose of providing a device configured as a novelty in the field of the application and resolves the aforementioned drawbacks, also providing other additional advantages that will be evident from the accompanying description below.

Therefore, an object of the present invention is to provide an automatic fruit juice squeezing machine according to claim 1 for dispensing a drink from said fruit. Said machine is of the type comprising a motorised squeezing medium to squeeze a fruit connected to a user interface for starting up the squeezing medium, said squeezing medium being housed in a frame.

In particular the frame includes a squeezing chamber facing the squeezing medium wherein at least one piece of fruit is disposed, said squeezing chamber including a housing wherein a membrane having waterproof and elasticity properties is supported, said membrane being disposed such that it is housed between the squeezing medium and the piece of fruit, and holding means envisaged for holding the piece of fruit in contact with the membrane, such as in an immobilised condition, due to which in an operating condition of the squeezing medium a squeezed liquid from the piece of fruit is expelled towards an outlet wherethrough liquid from the membrane flows out.

As a result of these characteristics, a fruit juice squeezing device with simplicity of construction is obtained which is capable of making the pulp from the piece of fruit being squeezed be deposited on the inner wall of said piece of fruit, due to which it prevents such residual pulp from accumulating in the machine, thereby blocking the outflow of juice while being obtained and avoiding interruptions during the preparation of the fruit juice drink.

Also, due to not having to manipulate the pulp during the drink preparation operation and to the presence of means for holding the piece of fruit in place during the operation of the device it is much more hygienic, since it is not necessary for the user to hold the fruit with one of his or her hands on the squeezing medium.

The fact that the membrane has waterproof properties avoids direct contact between the squeezing medium and the piece of fruit, due to which it is more hygienic and does not require cleaning, due to which it is not necessary to detach the squeezing medium from the frame of the machine.

In a preferred embodiment of the invention, the holding means may be comprised by a cover lid to hold the piece of fruit that includes a receiving section having a substantially semi-spherical shape to house the piece of fruit and blocking means for closing the lid with respect to the frame.

Advantageously, the cover lid includes a through hole that connects the external medium to the receiving section, such that the membrane can be cleaned without need to open the cover lid.

Advantageously, the cover lid may incorporate centring means that ensure a correct axial positioning of the piece of fruit with respect to the squeezing medium, such as to allow the fruit to be squeezed efficiently.

Preferably, the centring means have a movable part fixable on the inner side of the cover lid, said part having a substantially semi-spherical receiving section.

In one embodiment of the invention, the cover lid is joined to the frame in an articulated manner by means of a hinged portion.

The membrane is made of a film made of food-grade material, such as for example silicone or a silicone-based polymer.

The side of the membrane that is in contact with the piece of fruit to be squeezed has guiding means to guide the expulsion of the juice from the piece of fruit. In one embodiment, such guiding means are comprised by a rib that projects from the side, defining a central area wherein the rib ends project from two points distant from the edge of the membrane, such as to facilitate the guiding of the juice obtained in the squeezing chamber towards the outlet, due to which the use of additional elements such as parts in the manner of ducts with their respective connections is avoided.

In a preferred embodiment, the squeezing medium may comprise a rotary head coupled to a rotating axis actuated by driving means, wherein the head consists of a plurality of regions distributed in a radial configuration, wherein each of the regions is endowed with a plurality of spherical bodies.

In order to facilitate the handling of the fruit juice squeezing machine of the invention, the interface comprises a push-button that is connected to a control unit that is electrically connected to the driving means.

In accordance with another characteristic of the invention, the frame includes a support section for placing a receptacle, wherein the support section is disposed underneath the liquid outlet.

Additionally, the machine includes removable fixing means for fixing the membrane in the squeezing chamber.

Additionally, said fixing means may comprise at least one through hole that penetrates the membrane, wherethrough a pin, which can be removed, may be inserted, making it possible to remove the membrane, for example to be replaced by another one, or for more in-depth cleaning.

The membrane is positioned inside the housing on a plane that is inclined with respect to a horizontal plane of the machine.

In order to protect the components that form part of the machine, a protective housing is provided, in the interior of which the frame is disposed.

Another object of the invention provides a method for preparing a drink squeezed in a motorised fruit juice squeezing machine according to claim 15, wherein a piece of fruit is squeezed by means of a motorised squeezing element and wherein the piece of fruit is disposed such as to be in contact with an intermediate membrane having waterproof properties disposed between the squeezing element and the piece of fruit when the squeezing element is functioning (a rotating squeezing element) and without direct contact with the piece of fruit.

Other characteristics and advantages of the fruit juice squeezing machine object of the present invention will be evident from the description of a preferred, but not exclusive, embodiment, which is illustrated by way of nonlimiting example in the accompanying drawings, wherein:

### DESCRIPTION OF THE DRAWINGS

FIGURE 1. Shows a schematic view of a fruit juice squeezing and dispensing machine for domestic use in accordance with the present invention;
FIGURE 2. Shows a schematic front elevation view of the machine of the invention; and
FIGURE 3. Shows a schematic detailed view of a membrane used in the machine of the invention.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

In a particularly preferred embodiment and based on the schematised figures, the automatic fruit juice squeezing machine, envisaged to dispense a drink made from said fruit, comprises a motorised squeezing element to squeeze the fruit, indicated in general with reference (1), which is electrically connected to a push-button (2) present in an outer housing (3) which allows a user to start up the motorised squeezing element (1). The push-button is connected to a control unit (8) that is electrically connected and manages driving means (4) that form part of the motorised squeezing element (1).

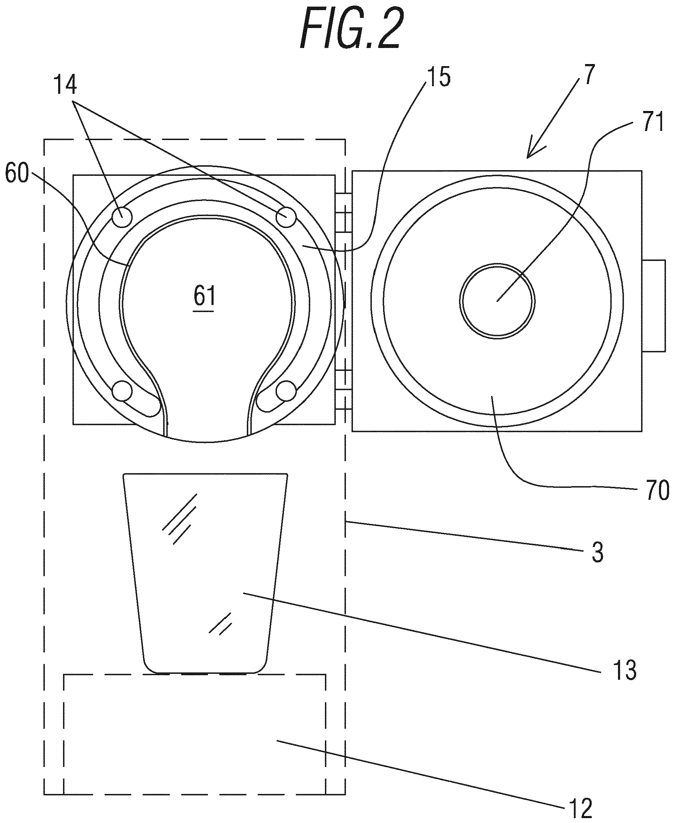

The frame includes a squeezing chamber (5) facing the squeezing element (1) wherein at least one piece of fruit is disposed, including the squeezing chamber (5), a housing wherein a membrane (6) having waterproof and elasticity properties is supported, said membrane (6) being disposed in such a manner that it is housed between the motorised squeezing element (1) and the piece of fruit. As represented in figure 2, the membrane is secured by a protuberance (15) of the frame having a substantially circular contour that has a section open at the bottom, which makes it possible for the juice to flow out of the membrane towards a receptacle (for example, a glass).

Also, holding means are provided for holding the piece of fruit that is in contact with the membrane (6) in an immobilised condition, due to which in an operating condition of the motorised squeezing element (1), a squeezed liquid from the piece of fruit is expelled towards an outlet wherethrough liquid flows out of the membrane (6).

Making particular reference to the holding means, these comprise a cover lid (7) for holding the piece of fruit that includes a receiving section (70) having a substantially semi-spherical shape for housing the piece of fruit and blocking means (not represented) which allow the user to close the cover lid (7) with respect to the frame. These blocking means may be by means of press-fit, a latch or pin, or any other closing means known in the state of the art.

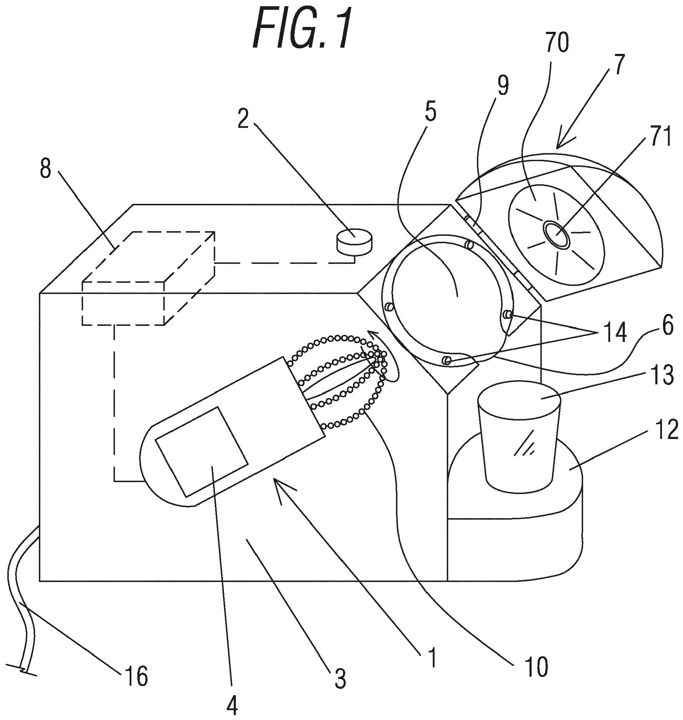

As can be observed in figures 1 and 2, the cover lid (7) may include a through hole (71) that connects the external medium to the receiving section (70) and that can be used, for example, to allow the passage of water in order to access the membrane for cleaning thereof without need to open the cover lid (7).

Additionally, the cover lid (7) may include centring means for axially positioning the piece of fruit with respect to the motorised squeezing element (1).

These centring means may consist of a movable part fixable to the inner side of the cover lid (7), said part having a substantially semi-spherical receiving section.

The cover lid (7) may be joined to the frame or to the outer housing in an articulated manner by means of hinges (9).

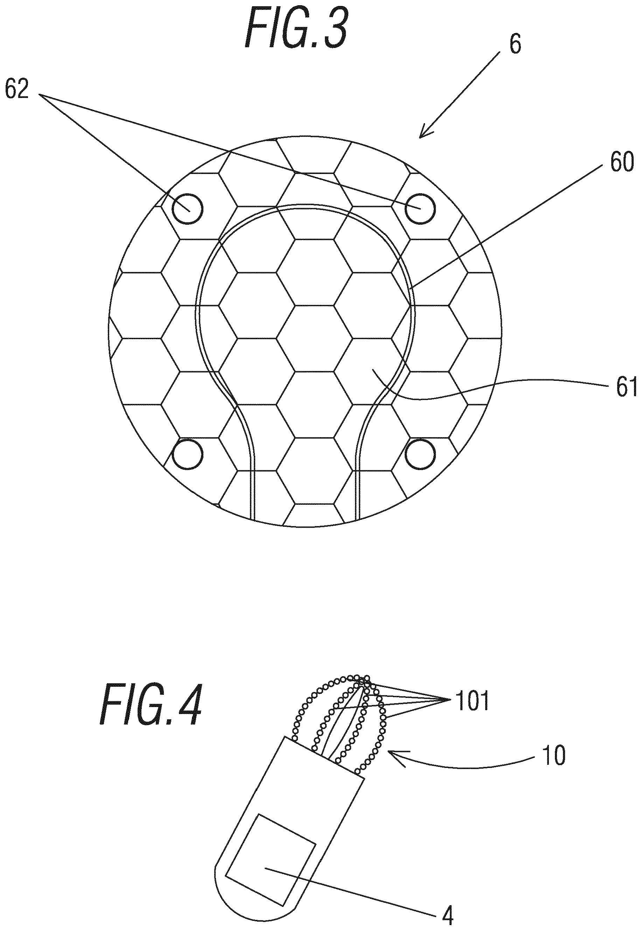

Returning to the membrane (6) and as shown in figure 3, said membrane (6) is made of a film of food quality silicone material, wherein the side of the membrane that is in contact with the piece of fruit to be squeezed has guiding means for guiding the expulsion of the juice from the piece of fruit. These guiding means are basically comprised by a rib (60) that projects from said side, defining a central area (61) wherein the ends of the rib (60) project from two points distant from the edge of the membrane (6). This central area (61) has dimensions such that the piece of fruit is disposed therewithin when the piece of fruit is being squeezed.

Going into greater detail, the motorised squeezing element (1) comprises a rotating head (10) that is coupled to a rotating shaft actuated by the driving means (4), said head (10) consisting of a plurality of regions (101) distributed in a radial configuration that recalls the external configuration of a cone for conventional fruit juice squeezing machines, wherein each of the regions (101) is endowed with a plurality of spherical bodies.

The housing (3) includes a support section at the bottom (12) for housing a recipient (13), said support section being disposed underneath the liquid outlet (see figures 1 and 2).

The machine is also endowed with removable fixing means that make it possible to mount the membrane in the squeezing chamber, said means comprising a plurality of through holes (62) disposed in the membrane (6) and which are positioned complementarily with holes present in the frame, wherethrough pins can be disposed (14).

In the present embodiment, the membrane (6) and the motorised squeezing element (1) is positioned inside the housing on a plane that is inclined with respect to a horizontal plane of the machine, as represented in figure 1.

In order to operate the machine, an electric cable (16) is provided that enables electrical connection to an external power supply, although it is possible to include a housing in which to insert an autonomous battery.

The machine functions as follows: the user places a piece of fruit, for example, citrus fruit, in the squeezing chamber in such a manner that said piece of fruit is disposed in contact with the membrane (6). Next, the user closes the cover lid (7) in such a manner that the piece of fruit is pressed against said membrane (6) and the user then actuates the motorised squeezing element (1) through the push-button (2), such that the action of squeezing the piece of fruit is carried out. It is possible that the user may have to maintain the push-button (2) pressed, such that the action of squeezing the piece of fruit is carried out. It is possible that the user may either have to keep the push-button (2) pressed during the operation or, with a "single touch", the motorised squeezing element may function for a period of time previously established by the user or machine of origin.

The details, shapes, dimensions and other accessory elements used in the manufacture of the fruit juice squeezing machine of the invention may be conveniently substituted for others that do not detract from the scope defined by the claims.

## Claims

1. An automatic fruit juice squeezing machine, for dispensing a drink made from a portion of fruit, being of the type that comprises a motorised squeezing element (1) for squeezing a pulp of a portion of fruit, connected to a user interface for starting up the squeezing element, wherein the squeezing element is housed in a frame, and the frame includes a pulp squeezing chamber (5) facing the squeezing element wherein at least one portion of fruit is disposed, said squeezing chamber (5) including a housing wherein a membrane (6) made of waterproof and elastic material is supported, and wherein:
- said motorised squeezing element (1) is a rotating squeezing element, in that;
- said membrane (6) is made of a film of food-grade material and positioned inside the housing on a plane that is inclined with respect to a horizontal plane of the machine, and in that,
- said membrane (6) is arranged between the rotating squeezing element and the portion of fruit to be squeezed in such a manner that the action of squeezing the pulp is carried out when the portion of fruit is pressed against a side of said membrane onto the rotating squeezing element and said rotating squeezing element is in operation, wherein the side of the membrane (6) that is in contact with the portion of fruit has guiding means to guide the expulsion of juice towards a liquid outlet,
- the machine further comprising holding means envisaged to hold the portion of fruit in contact with the membrane (6) during operation of the rotating squeezing element so that a squeezed liquid from the portion of fruit is expelled towards the liquid outlet from the inclined membrane (6).

2. The automatic fruit juice squeezing machine, according to claim 1, wherein the holding means comprise a cover lid (7) for holding the portion of fruit that includes a receiving section having a substantially semispherical shape for housing the portion of fruit and blocking means for closing the lid with respect to the frame.

3. The automatic fruit juice squeezing machine, according to claim 2, **characterised in that** the cover lid (7) includes a through hole that connects the external medium to the receiving section.

4. The automatic fruit juice squeezing machine, according to claim 2, **characterised in that** the cover lid (7) includes centring means for axially positioning the portion of fruit with respect to the position of the squeezing element (1).

5. The automatic fruit juice squeezing machine, according to claim 4, **characterised in that** the centring means have a movable part fixable to the inner side of the cover lid, said part having a substantially semi-spherical receiving section.

6. The automatic fruit juice squeezing machine, according to claim 1, **characterised in that** the membrane (6) is made of silicone or a polymer mixture with a silicone base.

7. The automatic fruit juice squeezing machine, according to claim 1, wherein the membrane (6) is secured to the frame by a protuberance (15) of the frame, said protuberance having substantially circular contour, said protuberance (15) of substantially circular contour having a section open at the bottom which makes it possible for the squeezed liquid to flow out of the membrane (6) towards a receptacle.

8. The automatic fruit juice squeezing machine, according to claim 1, **characterised in that** the guiding means are comprised by a rib (60) that projects from the side, defining a central area wherein the rib ends project from two points distant from the edge of the membrane (6).

9. The automatic fruit juice squeezing machine, according to claim 1, **characterised in that** the squeezing element (1) comprises a rotating head (10) that is coupled to a rotating shaft actuated by driving means (4), wherein the rotating head (10) consists of a plurality of regions (101) distributed in a radial configuration, wherein each of the regions (101) is endowed with a plurality of spherical bodies.

10. The automatic fruit juice squeezing machine, according to claim 1, wherein said rotating head (10) has an external configuration in the shape of a cone with a plurality of regions radially distributed forming a configuration that recalls the external configuration of a cone for conventional fruit juice squeezing machines.

11. The automatic fruit juice squeezing machine, according to any of the preceding claims, **characterised in that** the interface comprises a push-button that is connected to a control unit (8) that is electrically connected to the driving means.

12. The automatic fruit juice squeezing machine, according to claim 1, **characterised in that** the frame includes a support section for disposing a receptacle, said support section being disposed underneath the liquid outlet.

13. The automatic fruit juice squeezing machine, according to claim 1, **characterised in that** it includes removable fixing means for fixing the membrane (6) in the squeezing chamber (5).

14. The automatic fruit juice squeezing machine, according to claim 13, **characterised in that** said fixing means comprise at least one through hole that penetrates the membrane, where through a pin may be inserted.

15. A method for preparing a squeezed drink in a motorised fruit juice squeezing machine according to any of the preceding claims, wherein a portion of fruit is squeezed by means of a motorised rotating squeezing element, **characterised in that** it comprises the steps of;
a) placing the portion of fruit in contact with an intermediate membrane made of a film of food-grade material having elastic and waterproof properties, and wherein said intermediate membrane is positioned inside a housing on a plane that is inclined with respect to a horizontal plane of the machine and arranged between the rotating squeezing element and the portion of fruit, and
b) holding the portion of fruit in contact with a side of the inclined intermediate membrane during operation in such a manner that the action of squeezing the pulp is carried out when the piece or portion of fruit is pressed against the inclined intermediate membrane onto the rotating squeezing element and said rotating squeezing element is in operation, and the step of;
c) guiding the expulsion of juice towards a liquid outlet from the side of the inclined intermediate membrane that is contact with the portion of fruit

## Patentansprüche

1. Automatische Fruchtsaftpresse zum Ausgeben eines Getränks, das aus einer Portion Früchte hergestellt wird, die von dem Typ ist, der ein motorisiertes Quetschelement (1) zum Quetschen von Fruchtfleisch einer Portion Früchte umfasst, das mit einer Benutzerschnittstelle verbunden ist, um das Quetschelement zu starten, wobei das Quetschelement in einem Rahmen untergebracht ist und wobei der Rahmen eine Fruchtfleisch-Quetschkammer (5) aufweist, die dem Quetschelement zugewandt ist, in der wenigstens eine Portion Früchte angeordnet ist, wobei die Quetschkammer (5) ein Gehäuse umfasst, wobei eine Membran (6), die aus einem wasserfesten und elastischen Material hergestellt ist, gehalten wird, und wobei:
- das motorisierte Quetschelement (1) ein rotierendes Quetschelement ist; wobei
- die Membran (6) aus einer Folie aus lebensmittelechtem Material hergestellt ist und in dem Gehäuse in einer Ebene positioniert ist, die in Bezug auf eine horizontale Ebene der Presse geneigt ist, und wobei
- die Membran (6) zwischen dem rotierenden Quetschelement und der Portion Früchte, die gequetscht werden soll, so angeordnet ist, dass die Quetschwirkung auf das Fruchtfleisch ausgeführt wird, wenn die Portion Früchte gegen eine Seite der Membran auf das rotierende Quetschelement gepresst wird und das rotierende Quetschelement in Betrieb ist, wobei die Seite der Membran (6), die mit der Portion Früchte in Kontakt ist, Führungsmittel aufweist, um das Austreten von Saft in Richtung eines Flüssigkeitsauslasses zu leiten,
- die Presse ferner Haltemittel umfasst, die dafür vorgesehen sind, die Portion Früchte während des Betriebs des rotierenden Quetschelements so in Kontakt mit der Membran (6) zu halten, dass eine ausgequetschte Flüssigkeit von der Portion Früchte von der geneigten Membran (6) in Richtung des Flüssigkeitsauslasses ausgestoßen wird.

2. Automatische Fruchtsaftpresse nach Anspruch 1, wobei die Haltemittel einen Deckel (7) zum Halten der Portion Früchte umfassen, der einen Aufnahmeabschnitt umfasst, der im Wesentlichen die Form einer Halbkugel zum Aufnehmen der Portion Früchte und Blockiermittel zum Schließen des Deckels in Bezug auf den Rahmen aufweist.

3. Automatische Fruchtsaftpresse nach Anspruch 2, **dadurch gekennzeichnet, dass** der Deckel (7) ein Durchgangsloch aufweist, das das äußere Medium mit dem Aufnahmeabschnitt verbindet.

4. Automatische Fruchtsaftpresse nach Anspruch 2, **dadurch gekennzeichnet, dass** der Deckel (7) Zentriermittel für eine axiale Positionierung der Portion Früchte in Bezug auf die Position des Quetschelements (1) umfasst.

5. Automatische Fruchtsaftpresse nach Anspruch 4, **dadurch gekennzeichnet, dass** die Zentriermittel ein bewegliches Element aufweisen, das an der Innenseite des Deckels befestigbar ist, wobei das Element einen im Wesentlichen halbkugelförmigen Aufnahmeabschnitt aufweist.

6. Automatische Fruchtsaftpresse nach Anspruch 1, **dadurch gekennzeichnet, dass** die Membran (6) aus Silikon oder aus einer Polymermischung auf einer Silikonbasis hergestellt ist.

7. Automatische Fruchtsaftpresse nach Anspruch 1, wobei die Membran (6) durch einen Vorsprung (15) des Rahmens an dem Rahmen befestigt ist, wobei der Vorsprung einen im Wesentlichen kreisförmigen Umriss aufweist, wobei der Vorsprung (15) mit dem im Wesentlichen kreisförmigen Umriss einen Abschnitt aufweist, der am Boden offen ist, der es der ausgequetschten Flüssigkeit ermöglicht, aus der Membran (6) heraus in Richtung eines Behälters zu fließen.

8. Automatische Fruchtsaftpresse nach Anspruch 1, **dadurch gekennzeichnet, dass** die Führungsmittel aus einer Rippe (60) bestehen, die von der Seite vorsteht, die einen zentralen Bereich definiert, wobei die Rippenenden von zwei vom Rand der Membran (6) entfernten Punkten vorstehen.

9. Automatische Fruchtsaftpresse nach Anspruch 1, **dadurch gekennzeichnet, dass** das Quetschelement (1) einen rotierenden Kopf (10) umfasst, der mit einer rotierenden Welle gekoppelt ist, die durch Antriebsmittel (4) betätigt wird, wobei der rotierende Kopf (10) aus mehreren Bereichen (101) besteht, die in einer radialen Anordnung verteilt sind, wobei jeder der Bereiche (101) mit mehreren kugelförmigen Körpern ausgestattet ist.

10. Automatische Fruchtsaftpresse nach Anspruch 1, wobei der rotierende Kopf (10) eine äußere Konfiguration in der Form eines Kegels mit mehreren Bereichen, die radial verteilt sind, die eine Konfiguration bilden, die an die äußere Konfiguration eines Kegels für herkömmliche Fruchtsaftpressen erinnert, aufweist.

11. Automatische Fruchtsaftpresse nach einem der vorhergehenden Ansprüche, **dadurch gekennzeichnet, dass** die Schnittstelle eine Drucktaste umfasst, die mit einer Steuereinheit (8) verbunden ist, die mit den Antriebsmitteln elektrisch verbunden ist.

12. Automatische Fruchtsaftpresse nach Anspruch 1, **dadurch gekennzeichnet, dass** der Rahmen einen Halteabschnitt zum Anordnen eines Behälters umfasst, wobei der Halteabschnitt unter dem Flüssigkeitsauslass angeordnet ist.

13. Automatische Fruchtsaftpresse nach Anspruch 1, **dadurch gekennzeichnet, dass** sie abnehmbare Befestigungsmittel zum Befestigen der Membran (6) in der Quetschkammer (5) umfasst.

14. Automatische Fruchtsaftpresse nach Anspruch 13, **dadurch gekennzeichnet, dass** die Befestigungsmittel wenigstens ein Durchgangsloch umfassen, das die Membran durchdringt, durch das ein Stift eingesetzt werden kann.

15. Verfahren zum Zubereiten eines ausgequetschten Getränks in einer motorisierten Fruchtsaftpresse nach einem der vorhergehenden Ansprüche, wobei eine Portion Früchte mittels eines motorisierten rotierenden Quetschelements gequetscht wird, **dadurch gekennzeichnet, dass** es die Schritte umfasst:
a) Anordnen der Portion Früchte in Kontakt mit einer dazwischenliegenden Membran, die aus einer Folie aus lebensmittelechtem Material hergestellt ist, die elastische und wasserbeständige Eigenschaften aufweist, und wobei die dazwischenliegende Membran in einem Gehäuse in einer Ebene positioniert ist, die in Bezug auf eine horizontale Ebene der Presse geneigt ist, und zwischen dem rotierenden Quetschelement und der Portion Früchte angeordnet ist, und
b) Halten der Portion Früchte in Kontakt mit einer Seite der geneigten dazwischenliegenden Membran während des Betriebs, so dass die Quetschwirkung auf das Fruchtfleisch ausgeführt wird, wenn das Stück oder die Portion Früchte gegen die geneigte dazwischenliegende Membran auf das rotierende Quetschelement gepresst wird und das rotierende Quetschelement im Betrieb ist, und den Schritt umfasst:
c) Leiten des Ausstoßes von Saft in Richtung eines Flüssigkeitsauslasses von der Seite der geneigten dazwischenliegenden Membran, die mit der Portion Früchte in Kontakt ist.

## Revendications

1. Presse-fruits automatique pour distribuer une boisson réalisée à partir d'une partie de fruit, qui est du type qui comprend un élément de pression motorisé (1) pour presser une pulpe d'une partie de fruit, raccordé à une interface utilisateur pour démarrer l'élément de pression, dans lequel l'élément de pression est logé dans un bâti, et le bâti comprend une chambre de pression de pulpe (5) faisant face à l'élément de pression, dans lequel au moins une partie du fruit est disposée, ladite chambre de pression (5) comprenant un boîtier dans lequel une membrane (6) réalisée avec un matériau imperméable et élastique est supportée, et dans lequel :
ledit élément de pression motorisé (1) est un élément de pression rotatif, en ce que :
ladite membrane (6) est réalisée en un film de matériau de qualité alimentaire et positionnée à l'intérieur du boîtier sur un plan qui est incliné par rapport à un plan horizontal de la machine, et en ce que :
ladite membrane (6) est agencée entre l'élément de pression rotatif et la partie de fruit à presser de sorte que l'action consistant à presser la pulpe est réalisée lorsque la partie de fruit est pressée contre un côté de ladite membrane sur l'élément de pression rotatif, et ledit élément de pression rotatif est en fonctionnement, dans lequel le côté de la membrane (6) qui est en contact avec la partie de fruit, a des moyens de guidage pour guider l'expulsion du jus vers une sortie de liquide,
la machine comprenant en outre des moyens de maintien envisagés pour maintenir la partie de fruit en contact avec la membrane (6) pendant le fonctionnement de l'élément de pression rotatif de sorte qu'un liquide pressé provenant de la partie de fruit, est expulsé vers la sortie de liquide à partir de la membrane (6) inclinée.

2. Presse-fruits automatique selon la revendication 1, dans lequel les moyens de maintien comprennent un couvercle (7) pour maintenir la partie de fruit qui comprend une section de réception ayant une forme sensiblement semi-sphérique pour loger la partie de fruit et des moyens de blocage pour fermer le couvercle par rapport au bâti.

3. Presse-fruits automatique selon la revendication 2, **caractérisé en ce que** le couvercle (7) comprend un trou débouchant qui raccorde le milieu externe à la section de réception.

4. Presse-fruits automatique selon la revendication 2, **caractérisé en ce que** le couvercle (7) comprend des moyens de centrage pour positionner axialement la partie de fruit par rapport à la position de l'élément de pression (1).

5. Presse-fruits automatique selon la revendication 4, **caractérisé en ce que** les moyens de centrage ont une partie mobile pouvant être fixée sur le côté interne du couvercle, ladite partie ayant une section de réception sensiblement semi-sphérique.

6. Presse-fruits automatique selon la revendication 1, **caractérisé en ce que** la membrane (6) est réalisée en silicone ou un mélange de polymères avec une base de silicone.

7. Presse-fruits automatique selon la revendication 1, dans lequel la membrane (6) est fixée au bâti par une protubérance (15) du bâti, ladite protubérance ayant un contour sensiblement circulaire, ladite protubérance (15) du contour sensiblement circulaire ayant une section ouverte au fond qui permet au liquide pressé de sortir de la membrane (6) vers un réceptacle.

8. Presse-fruits automatique selon la revendication 1, **caractérisé en ce que** les moyens de guidage sont composés d'une nervure (60) qui fait saillie depuis le côté, définissant une zone centrale dans laquelle les extrémités de nervure font saillie à partir de deux points distants du bord de la membrane (6).

9. Presse-fruits automatique selon la revendication 1, **caractérisé en ce que** l'élément de pression (1) comprend une tête rotative (10) qui est couplée à un arbre rotatif actionné par des moyens d'entraînement (4), dans lequel la tête rotative (10) se compose d'une pluralité de régions (101) réparties dans une configuration radiale, dans lequel chacune des régions (101) est dotée d'une pluralité de corps sphériques.

10. Presse-fruits automatique selon la revendication 1, dans lequel ladite tête rotative (10) a une configuration externe se présentant sous la forme d'un cône avec une pluralité de régions réparties radialement, formant une configuration qui rappelle la configuration externe d'un cône pour les presse-fruits classiques.

11. Presse-fruits automatique selon l'une quelconque des revendications précédentes, **caractérisé en ce que** l'interface comprend un bouton-poussoir qui est raccordé à une unité de commande (8) qui est électriquement raccordée aux moyens d'entraînement.

12. Presse-fruits automatique selon la revendication 1, **caractérisé en ce que** le bâti comprend une section de support pour disposer un réceptacle, ladite section de support étant disposée au-dessous de la sortie de liquide.

13. Presse-fruits automatique selon la revendication 1, **caractérisé en ce qu'**il comprend des moyens de fixation amovibles pour fixer la membrane (6) dans la chambre de pression (5).

14. Presse-fruits automatique selon la revendication 13, **caractérisé en ce que** lesdits moyens de fixation comprennent au moins un trou débouchant qui pénètre dans la membrane, à travers lequel une broche peut être insérée.

15. Procédé pour préparer une boisson pressée dans un presse-fruits motorisé selon l'une quelconque des revendications précédentes, dans lequel une partie de fruit est pressée au moyen d'un élément de pression rotatif motorisé, **caractérisé en ce qu'**il comprend les étapes consistant à :
a) placer la partie de fruit en contact avec une membrane intermédiaire réalisée en un film de matériau de qualité alimentaire ayant des propriétés élastiques et imperméables, et dans lequel ladite membrane intermédiaire est positionnée à l'intérieur d'un boîtier sur un plan qui est incliné par rapport à un plan horizontal de la machine et agencé entre l'élément de pression rotatif et la partie de fruit, et
b) maintenir la partie de fruit en contact avec un côté de la membrane intermédiaire inclinée pendant le fonctionnement de sorte que l'action consistant à presser la pulpe, est réalisée lorsque le morceau ou la partie de fruit est pressé(e) contre la membrane intermédiaire inclinée sur l'élément de pression rotatif et ledit élément de pression rotatif est en fonctionnement, et l'étape consistant à :
c) guider l'expulsion du jus vers une sortie de liquide à partir du côté de la membrane intermédiaire inclinée qui est en contact avec la partie de fruit.
